(19) Europäisches Patentamt
European Patent Office
Office européen des brevets

(11) **EP 3 239 544 B1**

(12) **FASCICULE DE BREVET EUROPEEN**

(45) Date de publication et mention
de la délivrance du brevet:
**14.10.2020 Bulletin 2020/42**

(21) Numéro de dépôt: **16305478.6**

(22) Date de dépôt: **25.04.2016**

(51) Int Cl.:
*F16C 17/24* (2006.01)          *F16C 19/52* (2006.01)
*F16C 33/66* (2006.01)          *F16C 33/10* (2006.01)
*F16N 29/02* (2006.01)          *F16N 7/40* (2006.01)
*B63H 5/125* (2006.01)          *B63H 21/38* (2006.01)
*B63H 23/32* (2006.01)

(54) **UNITÉ DE PROPULSION POUR VÉHICULE AQUATIQUE COMPRENANT UN MODULE DE CONDITIONNEMENT DE FLUIDE HYDRAULIQUE ET PROCÉDÉ DE CONTRÔLE DU CONDITIONNEMENT**

ANTRIEBSEINHEIT FÜR EIN WASSERFAHRZEUG, DIE EIN AUFBEREITUNGSMODUL FÜR HYDRAULIKFLÜSSIGKEIT UMFASST, UND VERFAHREN ZUR KONTROLLE DER AUFBEREITUNG

PROPULSION UNIT FOR WATERCRAFT INCLUDING A HYDRAULIC FLUID CONDITIONING MODULE, AND METHOD FOR CONTROLLING THE CONDITIONING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**01.11.2017 Bulletin 2017/44**

(73) Titulaire: **GE Energy Power Conversion Technology Ltd**
**Rugby**
**Warwickshire CV21 1BU (GB)**

(72) Inventeurs:
• **JULLIAND, Lionel**
**90000 BELFORT (FR)**
• **VINCENT, Loïc**
**90000 BELFORT (FR)**

(74) Mandataire: **Casalonga**
**Casalonga & Partners**
**Bayerstraße 71/73**
**80335 München (DE)**

(56) Documents cités:
**WO-A1-2009/127774     JP-A- H11 166 549**
**US-A1- 2008 110 700**

## Description

La présente invention concerne le domaine des unités de propulsion pour des véhicules aquatiques, tels que des navires, des sous-marins ou encore des plateformes pétrolières.

Ces unités de propulsion, également connues sous la dénomination anglo-saxonne « Propulsion Oriented Drive », ou « POD », comprennent de manière générale un carter mobile monté en liaison pivot par rapport à un élément de coque du véhicule aquatique. L'élément de coque peut par exemple être la poupe ou encore la proue d'un navire. L'unité de propulsion comporte un élément de propulsion, pouvant par exemple être une hélice, solidaire d'un arbre d'entraînement monté rotatif à l'intérieur du carter mobile et pouvant être entraîné en rotation au moyen d'une machine électrique.

Une telle unité de propulsion peut comprendre des paliers rotatifs prévus afin de permettre la rotation de l'arbre d'entraînement par rapport au carter mobile. Pour limiter la friction, ces paliers peuvent comprendre un espace fermé contenant un fluide hydraulique, tel que de l'huile ou de l'eau. Des dispositifs d'étanchéité tels que des joints délimitent les espaces fermés et ont pour fonction d'empêcher les fuites de fluide hydraulique depuis ces espaces fermés.

Les paliers sont souvent soumis à de fortes contraintes mécaniques, notamment lorsque la rotation de l'arbre d'entrainement et de l'élément de propulsion est mise en œuvre sur des durées importantes. Ces contraintes se traduisent par un échauffement du fluide hydraulique contenu dans l'espace fermé et par la perte de ses propriétés lubrifiantes. Il en résulte une usure prématurée des paliers.

Pour pallier cet inconvénient, il peut être prévu un module de conditionnement du fluide hydraulique contenu dans l'espace fermé du palier. Le module de conditionnement est de manière générale conçu de sorte à pouvoir prélever du fluide hydraulique dans les espaces fermés des paliers, à pouvoir conditionner le fluide hydraulique prélevé et à pouvoir ensuite alimenter l'espace fermé des paliers avec le fluide hydraulique conditionné.

Cette solution n'est toutefois pas pleinement satisfaisante, étant donné que l'utilisation du module de conditionnement provoque l'apparition d'une surpression à l'intérieur des espaces fermés. Tout cela a un impact sur le fonctionnement des dispositifs d'étanchéité. Il en résulte des contraintes de dimensionnement des dispositifs d'étanchéité incompatibles avec l'espace réduit de l'intérieur du carter mobile de l'unité de propulsion. En outre, la durée de vie de ces dispositifs d'étanchéité est réduite. Il peut également s'ensuivre une moins bonne étanchéité.La présente invention a pour but de remédier à ces inconvénients.

Le document WO 2009/127774 A1 décrit, dans un premier mode de réalisation, un dispositif comprenant un carter en forme de POD, un arbre et des paliers rotatifs. Il est divulgué dans un autre mode de réalisation un capteur de la température d'un palier.

Plus particulièrement, la présente invention vise à prévoir une unité de propulsion dans laquelle le conditionnement du fluide hydraulique contenu dans l'espace fermé des paliers est optimisé.

Selon un premier aspect de l'invention, il est proposé une unité de propulsion pour véhicule aquatique comprenant un carter mobile monté en liaison pivot par rapport à un élément de coque du véhicule aquatique, un arbre d'entraînement d'un élément de propulsion, ledit arbre étant monté rotatif à l'intérieur du carter mobile au moyen d'au moins un palier comprenant un espace fermé prévu pour être rempli avec un fluide hydraulique, une machine électrique étant apte à entraîner l'arbre d'entraînement en rotation par rapport au carter mobile, l'unité de propulsion comportant en outre un module de conditionnement du fluide hydraulique contenu dans l'espace fermé du palier.

Selon une caractéristique générale de cette unité de propulsion, il est en outre prévu un dispositif de contrôle du conditionnement comportant un capteur de température et apte à actionner le conditionnement du fluide hydraulique contenu dans l'espace fermé en fonction de la température mesurée par le capteur de température.

Grâce au dispositif de contrôle, il est possible de n'utiliser le module de conditionnement qu'en cas de nécessité, de sorte à limiter l'apparition du phénomène de surpression. Cela permet notamment d'améliorer le fonctionnement des dispositifs d'étanchéité. Un autre avantage est que la consommation d'énergie due au conditionnement du fluide hydraulique des paliers d'arbre est réduite.

L'élément de propulsion peut par exemple être une hélice, ou encore un rotor de pompe.

Selon un mode de réalisation, le capteur de température est apte à mesurer la température du fluide hydraulique contenu dans l'espace fermé du palier.

Avantageusement, le dispositif de contrôle est apte à choisir un mode de fonctionnement parmi une désactivation du conditionnement, une activation intermédiaire du conditionnement et une activation nominale du conditionnement.

Dans un mode de réalisation, le dispositif de contrôle comprend des moyens pour empêcher la circulation de fluide hydraulique dans le module de conditionnement lorsque le mode de fonctionnement choisi est la désactivation du conditionnement.

On peut également prévoir des moyens pour faire circuler de manière intermittente le fluide hydraulique dans le module de conditionnement lorsque le mode de fonctionnement choisi est l'activation intermédiaire du conditionnement.

Selon un autre mode de réalisation, le dispositif de contrôle comprend des moyens pour faire circuler de manière permanente le fluide hydraulique dans le module de conditionnement lorsque le mode de fonctionnement choisi est l'activation nominale du conditionnement.

Avantageusement, le dispositif de contrôle comprend une cartographie dans laquelle sont stockées des valeurs de choix d'un mode de fonctionnement en fonction de la température mesurée par le capteur de température.

Dans un tel mode de réalisation, on peut prévoir que la cartographie délivre une valeur de désactivation du conditionnement lorsque la température mesurée est inférieure à un premier seuil de température, et une valeur d'activation du conditionnement lorsque la température mesurée est supérieure ou égale audit premier seuil de température.

On peut également prévoir que la cartographie délivre une valeur d'activation intermédiaire du conditionnement lorsque la température mesurée est inférieure à un second seuil de température et une valeur d'activation nominale du conditionnement lorsque la température mesurée est supérieure ou égale audit second seuil de température.

Plusieurs variantes sont possibles, concernant la disposition et le nombre de capteurs.

Selon une première variante, l'unité de propulsion comprend deux paliers montés sur l'arbre d'entraînement de part et d'autre de la machine électrique, chaque palier comportant un espace fermé, le dispositif de contrôle comprenant un unique capteur de température apte à mesurer la température du fluide hydraulique contenu dans l'espace fermé de l'un des paliers.

Une telle variante est notamment avantageuse, en ce qu'elle permet d'optimiser le conditionnement du fluide hydraulique de deux paliers, en n'utilisant qu'un seul capteur de température.

Selon une seconde variante, l'unité de propulsion comprend un premier palier et un second palier, les premier et second paliers étant montés sur l'arbre d'entraînement de part et d'autre de la machine électrique, le premier palier comportant un premier espace fermé, le second palier comportant un second espace fermé, le dispositif de contrôle comprenant un premier capteur de température apte à mesurer la température du fluide hydraulique contenu le premier espace fermé, et un second capteur de température apte à mesurer la température du fluide hydraulique contenu dans le second espace fermé, le dispositif de contrôle étant apte à mettre en œuvre le conditionnement par le module de conditionnement du fluide hydraulique contenu dans le premier espace fermé et dans le second espace fermé, respectivement en fonction des températures mesurées par le premier capteur et le second capteur.

Une telle variante est avantageuse en ce qu'elle permet d'optimiser le conditionnement d'un palier rotatif indépendamment de l'autre, de sorte à mettre en œuvre une optimisation plus fine du conditionnement.

On peut alors prévoir un premier circuit d'alimentation du premier espace fermé connecté au module de conditionnement et au premier espace fermé, un second circuit d'alimentation du second espace fermé connecté au module de conditionnement et au second espace fermé, les premier et second circuits d'alimentation étant respectivement divisés en une portion en amont et une portion en aval, la portion en amont du premier circuit d'alimentation et la portion en amont du second circuit d'alimentation étant communes, la portion en aval du premier circuit d'alimentation étant distincte de la portion en aval du second circuit d'alimentation, un organe de répartition délimitant la portion en amont des premier et second circuits d'alimentation, la portion en aval du premier circuit d'alimentation et la portion en aval du second circuit d'alimentation.

Une telle disposition est avantageuse dans la mesure où une seule pompe de circulation disposée sur la portion commune est nécessaire afin de permettre la circulation du fluide hydraulique dans les deux circuits d'alimentation, de sorte à limiter l'encombrement occasionné à l'intérieur de l'unité de propulsion. En outre, le montage de la pompe sur les conduits d'alimentation est intéressant en ce qu'il permet de disposer la pompe dans la partie de l'unité de propulsion comprise entre l'élément de coque et l'arbre d'entrainement, ladite partie comprenant davantage d'espace libre.

L'organe de répartition a pour fonction de diviser le flux de fluide hydraulique circulant dans la portion en amont des premier et second circuits d'alimentation en deux flux circulant respectivement dans la portion en aval du premier circuit d'alimentation et dans la portion en aval du second circuit d'alimentation.

Par exemple, l'organe de répartition peut comprendre deux restrictions de différents diamètres pratiquées respectivement dans la portion en aval du premier circuit d'alimentation et dans la portion en aval du second circuit d'alimentation. Selon les diamètres choisis, une certaine fraction, par exemple 30%, du flux circulant dans la portion en amont des premier et second circuits d'alimentation va constituer le flux circulant dans la portion en aval du premier circuit d'alimentation, la fraction restante, dans ce cas 70%, constituant le flux circulant dans la portion en aval du second circuit d'alimentation. Avec un tel organe de répartition, il n'est pas possible de piloter les fractions de flux circulant dans une portion en aval par rapport au flux circulant dans une portion en amont.

Selon un autre exemple, l'organe de répartition est constitué par un volet, un distributeur ou une vanne et est piloté par le dispositif de contrôle. Si cette disposition est susceptible d'engendrer un encombrement supplémentaire, elle permet un contrôle plus fin du conditionnement.

On peut par ailleurs prévoir un premier circuit d'évacuation du premier espace fermé connecté au premier espace fermé et au module de conditionnement, un second circuit d'évacuation du second espace fermé connecté au second espace fermé et au module de conditionnement, les premier et second circuits d'évacuation étant respectivement divisés en une portion en amont et une portion en aval, la portion en amont du premier circuit d'évacuation étant distincte de la portion en amont du second circuit d'évacuation, la portion en aval du premier circuit d'évacuation et la portion en aval du second circuit d'évacuation étant communes, un organe de répartition délimitant la portion en aval des premier et second circuits d'évacuation, la portion en amont du premier circuit d'évacuation et la portion en amont du second circuit d'évacuation.

Une telle disposition présente également l'avantage de ne nécessiter qu'une seule pompe pour permettre la circulation du fluide hydraulique dans les deux circuits d'évacuation. Si la pompe doit être disposée dans un espace présentant peu d'espace libre, cette disposition présente toutefois l'avantage que la pompe aspire le fluide hydraulique présent dans les premier et second espaces fermés, de sorte que la pression occasionnée dans lesdits espaces fermés est moins importante.

Selon un autre aspect, il est proposé un procédé de contrôle d'une unité de propulsion pour véhicule aquatique telle que décrite précédemment, dans lequel on mesure la température du fluide hydraulique contenu dans l'espace fermé du palier, puis on choisit un mode de fonctionnement du conditionnement du fluide hydraulique en fonction de la température mesurée, et on met en œuvre le conditionnement du fluide hydraulique par le module de conditionnement selon le mode de fonctionnement choisi.

Selon un mode de mise en œuvre avantageux, on compare la température mesurée à un premier seuil et à un troisième seuil, le troisième seuil étant supérieur au premier seuil, puis,

- si la température mesurée est inférieure au premier seuil, on désactive le conditionnement du fluide hydraulique tant que la température mesurée reste inférieure au troisième seuil, puis on active le conditionnement du fluide hydraulique dès que la température devient supérieure ou égale au troisième seuil,
- si la température mesurée est supérieure ou égale au troisième seuil, on active le conditionnement du fluide hydraulique tant que la température mesurée reste supérieure au premier seuil, puis on désactive le conditionnement du fluide hydraulique dès que la température devient inférieure au premier seuil.

Selon un autre mode de mise en œuvre, on compare la température mesurée à un second seuil et à un quatrième seuil, le quatrième seuil étant supérieur au second seuil, puis,

- si la température mesurée est inférieure au second seuil, on active le conditionnement du fluide hydraulique de manière intermédiaire tant que la température mesurée reste inférieure au quatrième seuil, puis on active le conditionnement du fluide hydraulique de manière permanente dès que la température devient supérieure ou égale au quatrième seuil,
- si la température mesurée est supérieure ou égale au quatrième seuil, on active le conditionnement du fluide hydraulique de manière permanente tant que la température mesurée reste supérieure au deuxième seuil, puis on active le conditionnement du fluide hydraulique dès que la température devient inférieure au deuxième seuil.

D'autres buts, caractéristiques et avantages de l'invention apparaitront à la lecture de la description suivante, donnée uniquement à titre d'exemple non limitatif, et faite en référence aux dessins annexés sur lesquels :

- la figure 1 représente schématiquement une unité de propulsion selon un unique mode de réalisation de l'invention, et
- la figure 2 est un schéma hydraulique de l'unité de propulsion de la figure 1.

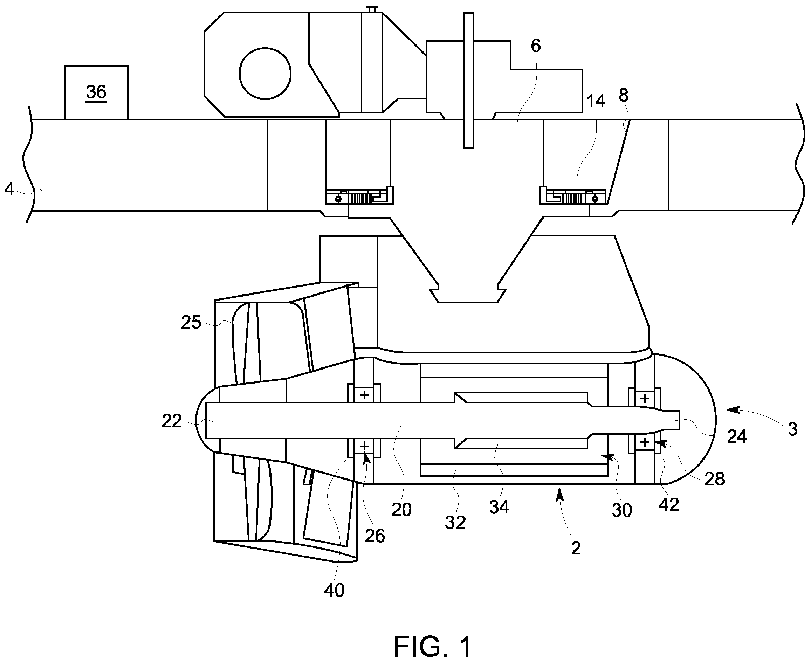

On a représenté sur la figure 1 une unité de propulsion 2 incorporée sur un navire (non représenté). L'unité de propulsion 2 est notamment constituée d'un carter mobile 3 qui s'étend en saillie et vers l'extérieur depuis un élément de coque 4 du navire, en l'espèce la poupe du navire. En référence à la figure 1, l'espace situé au-dessus de l'élément de coque 4 correspond au volume intérieur de la coque, l'espace situé en dessous correspondant au volume extérieur de la coque 4.

L'unité de propulsion 2 comporte une partie supérieure 6 solidaire du carter mobile 3 et introduite à l'intérieur d'un alésage 8 pratiqué dans l'élément de coque 4. La partie supérieure 6 comporte une portion cylindrique (non référencée). L'alésage 8 comporte une portion cylindrique (non référencée) située en regard de la portion cylindrique de la partie supérieure 6. Un palier rotatif d'azimut 14 est disposé entre les deux portions cylindriques respectives de la partie supérieure 6 et de l'alésage 8. Le palier d'azimut 14 peut par exemple être un palier à roulement, comportant une bague intérieure (non représentée) solidaire de la portion cylindrique de la partie supérieure 6 et une bague extérieure (non représentée) solidaire de la portion cylindrique de l'alésage 8. Un espace de roulement (non représenté) est défini, radialement situé entre les deux portions cylindriques précitées. À l'intérieur de l'espace de roulement sont disposés des éléments de roulement (non représentés) pouvant être des rouleaux, des billes ou des aiguilles.

Grâce au palier d'azimut 14, l'unité de propulsion 2 peut pivoter autour de l'axe de lacet du navire, afin d'orienter la propulsion. Un moteur (non référencé), en l'espèce une machine électrique, est disposé à l'intérieur de l'élément de coque 4 et associé avec un élément de transmission (non référencé) afin d'entraîner la partie supérieure 6 et le carter mobile 3 en rotation.

Un arbre d'entraînement 20 monté à l'intérieur du carter mobile 3 comporte une première extrémité 22 et une deuxième extrémité 24, opposée à la première extrémité 22. Une hélice 25 est montée sur la première extrémité 22 et s'étend radialement par rapport à l'axe de l'arbre 20. Bien que, dans le mode de réalisation illustré, une hélice soit utilisée pour fournir la propulsion, on ne sort pas du cadre de l'invention en envisageant tout autre type d'élément de propulsion, comme par exemple un rotor de pompe. L'arbre 20 est monté rotatif par rapport au carter mobile 3, et comporte à cet égard des paliers rotatifs d'arbre. En l'espèce, il est prévu un premier palier d'arbre 26 situé à proximité de la première extrémité 22 et un deuxième palier d'arbre 28 situé à proximité de la deuxième extrémité 24. Grâce aux paliers d'arbre 26 et 28, l'arbre d'entraînement 20 et l'hélice 25 peuvent être entraînés en rotation autour de l'axe de l'arbre 20, par rapport au carter mobile 3.

Les paliers d'arbre 26 et 28 sont, dans l'exemple de réalisation illustré, des paliers à roulement comprenant chacun une bague intérieure (non représentée) solidaire de l'arbre 20, une bague extérieure (non représentée) solidaire du carter mobile 3. Un espace de roulement (non représenté) est défini dans chaque cas et radialement délimité par la bague intérieure et la bague extérieure. Une pluralité d'éléments de roulement (non représentée) est disposée à l'intérieur de l'espace de roulement. Les éléments de roulement peuvent en particulier être des billes, des rouleaux ou encore des aiguilles. Comme pour le palier d'azimut 14, on peut, sans sortir du cadre de l'invention, envisager que les paliers d'arbre 26 et 28 soient des paliers de conception différente, comme des paliers à coussinets. Selon une telle conception, chacun des paliers 26, 28 comprend une pièce annulaire intérieure solidaire de l'arbre 20 et une pièce annulaire extérieure solidaire du carter mobile 3, la pièce annulaire intérieure et la pièce annulaire extérieure étant directement en contact ou quasiment en contact l'une avec l'autre.

Une machine électrique 30 est prévue afin d'entraîner l'arbre 20 et l'hélice 25 en rotation. La machine électrique 30 est disposée axialement entre le palier d'arbre 26 et le palier d'arbre 28. La machine électrique 30 comporte un stator 32 solidaire du carter mobile 3 et un rotor 34 solidaire de l'arbre d'entraînement 20.

Un fluide hydraulique, par exemple de l'huile, est introduit à l'intérieur de l'espace de roulement du palier d'arbre 26 et du palier d'arbre 28 afin de limiter la friction entre la bague intérieure, la bague extérieure et les éléments roulants. Par ailleurs, on utilise le même fluide hydraulique pour lubrifier chacun des paliers 26 et 28. Dans le cas où l'un des paliers 26 et 28 est un palier à coussinet, le fluide hydraulique est utilisé pour créer un mince filet de fluide lubrifiant entre les bagues quasiment en contact l'une avec l'autre.

Un module de conditionnement 36 de fluide hydraulique est prévu à l'intérieur de l'élément de coque 4. Le module de conditionnement 36 a pour fonction d'assurer le conditionnement du fluide hydraulique utilisé pour lubrifier les paliers 26 et 28, afin que ce fluide hydraulique conserve de bonnes propriétés lubrifiantes.

Un espace fermé 40 est prévu à l'intérieur du carter mobile 3 afin de contenir le fluide hydraulique servant à lubrifier le palier d'arbre 26. De préférence, l'espace fermé 40 contient l'espace de roulement du palier d'arbre 26. L'espace fermé 40 est rendu étanche au moyen de joints d'étanchéité (non représentés).

De la même façon, un espace fermé 42 est prévu à l'intérieur du carter mobile 3 afin de contenir le fluide hydraulique servant à lubrifier le palier d'arbre 28. A cet effet, l'espace fermé 42 contient l'espace de roulement du palier d'arbre 28. L'espace fermé 42 est lui aussi rendu étanche au moyen de joints d'étanchéité (non représentés).

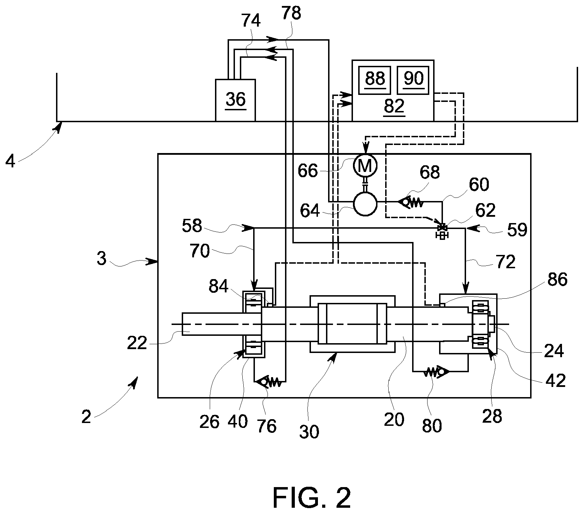

L'espace fermé 40, l'espace fermé 42 et le module de conditionnement 36 sont fluidiquement connectés par des circuits d'alimentation et/ou d'évacuation qui sont représentés et détaillés en référence à la figure 2.

Pour chaque espace fermé 40, 42, il est respectivement prévu un circuit d'alimentation et un circuit d'évacuation du fluide hydraulique. Le circuit d'alimentation est conçu de sorte à pouvoir fournir du fluide hydraulique issu du module de conditionnement 36 à l'espace fermé 40, 42 correspondant. À l'opposé, le circuit d'évacuation est prévu afin de prélever du fluide hydraulique depuis l'espace fermé 40, 42 correspondant et de le restituer au module de conditionnement 36.

Le circuit d'alimentation de l'espace fermé 40 du palier d'arbre 26 comporte un conduit d'alimentation 58. Le conduit d'alimentation 58 est d'une part connecté au module de conditionnement 36 et d'autre part connecté à l'espace fermé 40. De même, le circuit d'alimentation de l'espace fermé 42 du palier d'arbre 28 comporte un conduit d'alimentation 59, étant d'une part connecté au module de conditionnement 36 et d'autre part connecté à l'espace fermé 42. Le conduit 58 comprend des moyens pour faire circuler, en sens unique, du fluide hydraulique depuis le module de conditionnement 36 vers l'espace fermé 40. De même, le conduit 59 comprend des moyens pour faire circuler en sens unique du fluide hydraulique depuis le module de conditionnement 36 vers l'espace fermé 42.

Dans le mode de réalisation représenté sur la figure 2, les conduits 58 et 59 comprennent une portion commune 60. La portion commune 60 s'étend depuis le module de conditionnement 36 jusqu'à un organe de répartition 62. En l'espèce, l'organe de répartition est une vanne trois voies, mais on pourrait sans sortir du cadre de l'invention envisager tout autre type d'organe de répartition, comme une autre vanne pilotée, un volet piloté, un distributeur piloté... Une pompe 64 couplée mécaniquement avec un moteur 66 est montée sur la portion commune 60. Un clapet anti-retour 68 est monté sur la portion commune 60, entre la pompe 64 et la vanne trois voies 62. Le clapet 68 restreint le sens de circulation du fluide hydraulique à l'intérieur de la portion commune 60 en sens unique depuis le module de conditionnement 36 vers la vanne trois voies 62 (de gauche à droite et de haut en bas sur la figure 2). Ainsi, la portion commune 60 est située en amont de la vanne trois voies 62.

En aval de la vanne trois voies 62, le conduit 58 comporte une portion 70 s'étendant depuis la vanne trois voies 62 jusqu'à l'espace fermé 40. De même, en aval de la vanne trois voies 62, le conduit 59 comporte une portion 72 s'étendant depuis la vanne trois voies 62 jusqu'à l'espace fermé 42. Ainsi, les portions 70 et 72 respectives des conduits 58 et 59, qui sont situées en aval de la vanne trois voies 62, sont totalement distinctes l'une de l'autre.

Au vu de ce qui précède, dans ce mode de réalisation, les circuits d'alimentation des espaces fermés 40 et 42 comprennent une portion commune et une portion distincte. La portion commune présente en particulier l'avantage de réduire l'encombrement et les coûts de conception, étant entendu qu'une seule pompe et un seul clapet anti-retour est nécessaire. En pilotant la vanne trois voies 62 de manière appropriée, il est possible d'alimenter les deux espaces 40 et 42 en fluide hydraulique, de n'alimenter aucun des espaces 40 et 42 ou de n'alimenter qu'un seul espace sur les deux. Toutefois, de manière alternative, on peut envisager sans sortir du cadre de l'invention des circuits d'alimentation respectifs des espaces fermés 40 et 42 totalement distincts l'un par rapport à l'autre. Dans un tel mode de réalisation, chaque circuit d'alimentation d'un espace fermé 40, 42 comporte un conduit distinct reliant le module de conditionnement 36 à l'espace fermé 40, 42 correspondant, une pompe et un clapet anti-retour étant disposés sur chacun des conduits. Un tel mode de réalisation alternatif, s'il génère plus d'encombrement et nécessite une conception plus poussée, permet de contrôler de manière plus fine les échanges de fluide hydraulique entre le module de conditionnement 36 et les espaces fermés 40 et 42.

Le circuit d'évacuation de l'espace fermé 40 du palier d'arbre 26 comporte un conduit d'évacuation 74 fluidiquement connecté d'une part à l'espace fermé 40 et d'autre part au module de conditionnement 36. Un clapet anti-retour 76 est disposé sur le conduit 74, de telle sorte que le fluide hydraulique ne puisse circuler dans le conduit d'évacuation 74 qu'en sens unique, depuis l'espace fermé 40 vers le module de conditionnement 36.

De même, le circuit d'évacuation de l'espace fermé 42 du palier d'arbre 28 comporte un conduit d'évacuation 78 fluidiquement connecté d'une part à l'espace fermé 42 et d'autre part au module de conditionnement 36. Le circuit 78 comporte un clapet anti-retour 80, monté de telle sorte que le fluide hydraulique ne puisse circuler dans le conduit d'évacuation 78 qu'en sens unique, depuis l'espace fermé 42 vers le module de conditionnement 36.

De cette manière, pour chacun des espaces fermés 40, 42, le circuit d'alimentation et le circuit d'évacuation mettent en place une boucle d'échange de fluide hydraulique avec le module de conditionnement 36. Cette boucle d'échange peut être commandée au moyen du moteur 66 et de la vanne trois voies 62.

En vue de fournir cette commande, l'unité de propulsion comporte un dispositif de contrôle 82. Le dispositif de contrôle 82 est notamment prévu afin de contrôler la circulation du fluide hydraulique entre l'espace fermé 40, 42 et le module de conditionnement 36. En particulier, le dispositif de contrôle 82 est conçu de sorte à assurer un contrôle optimal de la circulation du fluide hydraulique en vue de son conditionnement, de manière à éviter une perte de ses propriétés lubrifiantes tout en évitant que le conditionnement entraîne des défauts d'étanchéité et une usure des joints délimitant les espaces fermés.

À cet effet, le dispositif de contrôle 82 comporte un premier capteur de température 84. Le capteur 84 est monté de sorte à pouvoir mesurer la température du fluide hydraulique contenu dans l'espace fermé 40. Dans le mode de réalisation illustré sur la figure 2, le capteur 84 est monté à l'intérieur de l'espace fermé 40.

De la même façon, le dispositif de contrôle 82 comporte un deuxième capteur de température 86 monté à l'intérieur de l'espace fermé 42 et capable de mesurer la température du fluide hydraulique contenu dans cet espace.

Comme cela est représenté par les flèches en pointillés, le dispositif de contrôle 82 recueille les signaux délivrés par les capteurs de température 84 et 86.

En outre, le dispositif de contrôle 82 comprend des moyens matériels et logiciels pour commander l'actionnement du moteur 66 couplé mécaniquement avec la pompe 64. Le dispositif de contrôle 82 comporte également des moyens matériels et logiciels pour commander l'actionnement de la vanne trois voies 62.

Plus particulièrement, le dispositif de contrôle 82 est doté des moyens matériels et logiciels pour pouvoir commander, de manière alternative, l'alimentation des deux espaces fermés 40 et 42, l'alimentation du seul espace fermé 40, l'alimentation du seul espace fermé 42 ou l'alimentation d'aucun des espaces fermés.

Lorsque le dispositif de contrôle 82 commande l'alimentation des deux espaces fermés 40 et 42, le dispositif 82 commande l'ouverture de la vanne trois voies 62, de telle sorte que le flux de fluide hydraulique circulant à l'intérieur de la portion commune 60 se divise en deux flux égaux empruntant respectivement la portion en aval 70 et la portion en aval 72. Par ailleurs, le moteur 66 de la pompe 64 est actionné à puissance nominale.

Lorsque le dispositif de contrôle 82 commande l'alimentation du seul espace fermé 40, la vanne trois voies 62 est actionnée de telle sorte que la totalité du flux de fluide hydraulique circulant dans la portion commune 60 soit dirigée vers la portion en aval 70. En d'autres termes, le flux de fluide hydraulique circulant dans la portion en aval 72 est nul. En outre, le moteur 66 est commandé pour fonctionner à puissance réduite.

De même, lorsque le dispositif de contrôle 82 commande l'alimentation du seul espace fermé 42, la vanne trois voies 62 est actionnée de telle sorte que la totalité du flux de fluide hydraulique circulant dans la portion commune 60 soit dirigée vers la portion en aval 72. En d'autres termes, le flux de fluide hydraulique circulant dans la portion en aval 70 est nul. En outre, le moteur 66 est commandé pour fonctionner à puissance réduite.

Lorsque le dispositif de contrôle 82 commande l'alimentation d'aucun des espaces fermés 40, 42, le moteur 66 de la pompe 64 est arrêté et la vanne trois voies 62 est fermée. De la sorte, le flux de fluide hydraulique circulant dans la portion en amont 60 est nul, tout comme les flux de fluide hydraulique circulant dans les portions en aval 70 et 72. Ce faisant, le dispositif de contrôle 82 est capable d'actionner ou non le conditionnement du fluide hydraulique contenu dans chaque espace fermé 40, 42.

Ainsi, dans le mode de réalisation illustré sur la figure 2, la commande du conditionnement du fluide hydraulique par le dispositif de contrôle 82 est mise en œuvre en pilotant le moteur 66 et la vanne trois voies 62. Toutefois, on ne sort pas du cadre de l'invention en envisageant une commande du conditionnement différente. Par exemple, il peut être envisagé que le dispositif de contrôle 82 pilote directement le module de conditionnement 36. Plus particulièrement, le dispositif de contrôle 82 peut commander la circulation d'un liquide de refroidissement à l'intérieur d'un circuit de refroidissement. Lorsque le dispositif de contrôle 82 arrête la circulation du liquide de refroidissement, le fluide hydraulique circulant dans le module de conditionnement 36 n'est pas refroidi. Il est alors possible d'empêcher, pour l'un ou l'autre des espaces fermés 40, 42, le conditionnement du fluide hydraulique sans pour autant désactiver la circulation de fluide dans les circuits d'alimentation 58, 59 et d'évacuation 74, 78 correspondants.

Pour déterminer s'il doit être actionné le conditionnement du fluide hydraulique contenu dans l'espace fermé 40, le dispositif de contrôle 82 comprend une première cartographie 88. La première cartographie 88 contient des valeurs d'un mode de fonctionnement du conditionnement du fluide hydraulique contenu dans l'espace fermé 40, en fonction de la température mesurée par le premier capteur de température 84.

Plus particulièrement, dès que la température mesurée par le capteur 84 est inférieure à un premier seuil de température $T_0$, la cartographie 88 délivre une valeur de commande d'une désactivation du conditionnement. Dans ce cas, le dispositif de contrôle 82 pilote le moteur 66 et la vanne 62 de sorte à empêcher l'alimentation de l'espace fermé 40 en fluide hydraulique. Dans l'exemple de réalisation représenté sur la figure 2, la valeur du premier seuil de température $T_0$ est comprise entre 20 °C et 30 °C, et de préférence sensiblement égale à 25 °C.

Lorsque la température mesurée par le capteur 84 est comprise entre le premier seuil de température $T_0$ et un second seuil de température $T_1$, la cartographie 88 délivre une valeur de commande d'une activation intermédiaire du conditionnement. Dans ce cas, le dispositif de contrôle 82 actionne de manière intermittente l'alimentation de l'espace fermé 40 en fluide hydraulique. Plus particulièrement, dans le mode de réalisation représenté sur la figure 2, le dispositif de contrôle 82 pilote l'alimentation de l'espace fermé 40 pendant une première durée $\Delta_1$, puis inhibe l'alimentation de l'espace fermé 40 pendant une deuxième durée $\Delta_2$. Dans le mode de réalisation illustré sur la figure 2, le deuxième seuil de température $T_1$ est compris entre 50 °C et 60 °C, et de préférence sensiblement égal à 55 °C. Par ailleurs, la durée $\Delta_1$ est de préférence comprise entre 1 min et 3 min, et de préférence sensiblement égale à 2 min. La durée $\Delta_2$ est de préférence comprise entre 9 min et 11 min, et de préférence sensiblement égale à 10 min.

Lorsque la température mesurée par le capteur 84 est supérieure au second seuil de température $T_1$, la cartographie 88 délivre une valeur de commande d'une activation nominale du conditionnement. Dans ce cas, le dispositif de contrôle 82 pilote le moteur 66 et la vanne 62, de telle sorte que l'espace fermé 40 soit alimenté de manière permanente en fluide hydraulique.

Le dispositif de contrôle 82 comprend par ailleurs une seconde cartographie 90. La seconde cartographie 90 contient des valeurs d'un mode de fonctionnement du conditionnement du fluide hydraulique contenu dans l'espace fermé 42, en fonction de la température mesurée par le second capteur de température 86. De même que pour la cartographie 88, la cartographie 90 délivre trois valeurs de commande. En fonction de la valeur de commande délivrée par la cartographie 90, le dispositif de contrôle 82 commande le conditionnement du fluide hydraulique contenu dans l'espace fermé 42 selon un mode de fonctionnement choisi parmi une désactivation du conditionnement, une activation intermédiaire du conditionnement et une activation nominale du conditionnement. Dans le mode de réalisation illustré, les seuils de température de la cartographie 90 sont les mêmes que pour la cartographie 88. Toutefois, on ne sort pas du cadre de l'invention en envisageant des seuils de température différents. Par ailleurs, le conditionnement du fluide hydraulique contenu dans l'espace fermé 42 est mis en œuvre de la même manière que le conditionnement du fluide hydraulique contenu dans l'espace fermé, lorsque les valeurs de commande délivrées par les cartographies 88 et 90 sont les mêmes. En particulier, lorsqu'une activation intermédiaire du conditionnement du fluide hydraulique est mise en œuvre, l'alimentation de l'espace fermé 42 en fluide hydraulique est activée pendant un instant de durée sensiblement égale à $\Delta_1$, puis inhibée pendant un instant de durée sensiblement égale à $\Delta_2$.

De la sorte, au moyen du dispositif qui vient d'être décrit, il est possible de mettre en œuvre le procédé qui suit.

Tout d'abord, concernant le fluide hydraulique contenu dans l'espace fermé 40 du premier palier 26, on mesure la température dudit fluide hydraulique au moyen du capteur 84. On introduit ensuite la valeur mesurée dans la cartographie 88 qui délivre une valeur de commande d'un mode de fonctionnement. En fonction de la température mesurée, la valeur délivrée par la cartographie 88 commande la désactivation du conditionnement, l'activation intermédiaire du conditionnement ou l'activation nominale du conditionnement du fluide hydraulique contenu dans l'espace fermé 40.

Si la valeur délivrée par la cartographie 88 commande la désactivation du conditionnement, on pilote le moteur 66 et la vanne 62 de sorte que l'espace fermé 40 ne soit pas alimenté en fluide hydraulique.

Si la valeur délivrée commande l'activation intermédiaire du conditionnement, on pilote le moteur 66 et la vanne 62 de sorte que l'espace fermé 40 soit alimenté de manière intermittente en fluide hydraulique, et ne soit pas alimenté le reste du temps.

Si la valeur délivrée par la cartographie 88 commande l'activation nominale du conditionnement, on pilote le moteur 66 et la vanne 62 de sorte que l'espace fermé 40 soit alimenté en permanence en fluide hydraulique.

En parallèle, on met en œuvre le même procédé pour le fluide hydraulique contenu dans l'espace fermé 42 du deuxième palier 28, au moyen de la seconde cartographie 90.

Au vu de ce qui précède, il est possible de piloter l'alimentation d'au moins l'un des espaces fermés en fluide hydraulique conditionné à partir d'un paramètre pertinent déterminé par une mesure. Ce faisant, on contrôle le conditionnement du fluide hydraulique contenu dans les espaces fermés 40 et 42. Le paramètre mesuré est la température du fluide hydraulique contenu dans l'espace fermé 40, 42 correspondant.

Ainsi, le conditionnement du fluide hydraulique est contrôlé de sorte à n'être actionné que lorsque nécessaire. Par exemple, on évite au moyen d'un tel dispositif et d'un tel procédé d'actionner en permanence le conditionnement du fluide hydraulique contenu dans les espaces fermés 40 et 42, lorsque le navire évolue dans de l'eau froide. Dans ce cas, le conditionnement du fluide hydraulique est généralement inutile, étant donné que le fluide hydraulique est refroidi de manière naturelle par l'eau de mer. Dans ces conditions, on évite l'apparition d'une surpression à l'intérieur des espaces fermés 40 et 42. On évite alors les fuites de fluide hydraulique et l'endommagement des joints d'étanchéité qui en résultent.

En outre, il est prévu une commande d'activation intermédiaire du conditionnement, selon laquelle le conditionnement est mis en œuvre de manière intermittente. Cette commande est particulièrement intéressante car elle limite l'élévation trop importante de la température du fluide hydraulique, sans pour autant occasionner les surpressions susceptibles d'être rencontrées suite à la mise en œuvre d'un conditionnement en permanence sur une longue durée.

Selon une variante avantageuse de ce procédé, on compare la température mesurée à quatre seuils de température à la place de seulement deux seuils de température. Plus particulièrement, on définit, outre les premier et deuxième seuils $T_0$ et $T_1$, un troisième seuil $T_2$ compris entre le premier seuil et le deuxième seuil et un quatrième seuil $T_3$ supérieur au deuxième seuil. On a alors :

$$T_0 < T_2 < T_1 < T_3$$

Selon cette variante, le mode de fonctionnement choisi pour le conditionnement du fluide hydraulique dont la température est mesurée est :

- la désactivation du conditionnement lorsque la température mesurée est inférieure au premier seuil $T_0$ (intervalle A),
- l'activation intermédiaire du conditionnement lorsque la température mesurée est comprise le troisième seuil $T_2$ et entre le second seuil $T_1$ (intervalle B), et
- l'activation nominale du conditionnement lorsque la température est supérieure au quatrième seuil $T_3$ (intervalle C).

Par ailleurs, lorsque la température mesurée passe d'une valeur comprise dans l'un des intervalles A, B et C définis ci-dessus à une valeur non comprise dans ces intervalles (comprise entre $T_0$ et $T_1$ ou comprise entre $T_2$ et $T_3$), le mode de fonctionnement choisi reste le même, jusqu'à ce que la température mesurée prenne une valeur comprise dans lesdits intervalles A, B ou C. Dès que la température mesurée est de nouveau comprise dans l'un des intervalles A, B ou C, on applique la règle précisée ci-dessus.

Par exemple, le troisième seuil de température $T_2$ est supérieur d'une valeur de 1°C à 3°C, par rapport au premier seuil $T_0$. De même, le quatrième seuil de température $T_3$ est supérieur d'une valeur de 1°C à 3°C, par rapport au second seuil $T_1$.

Une telle variante du procédé qui a été présenté est avantageuse, en ce que, lorsqu'on choisit le mode de fonctionnement, le seuil pris en considération n'est pas le même, selon que l'on change de mode de fonctionnement dans un sens ou dans l'autre. Par exemple, le seuil pris en considération n'est pas le même, lorsque l'on bascule du mode de fonctionnement en désactivation vers celui en activation intermédiaire, et lorsque l'on bascule du mode de fonctionnement en activation intermédiaire vers celui en désactivation. Ce décalage entre les seuils permet d'éviter de changer trop souvent de mode de fonctionnement, ce qui aurait pour effet d'user prématurément le moteur 66, la vanne 62 et tous les autres éléments constitutifs de l'unité de propulsion 2 permettant le conditionnement du fluide hydraulique.

Dans le mode de réalisation qui a été illustré sur la figure 2, le mode de fonctionnement du conditionnement est choisi en fonction de la température du fluide hydraulique contenu dans l'espace fermé correspondant. Toutefois, on peut envisager, sans sortir du cadre de l'invention, de choisir en fonction d'un autre paramètre. Par exemple, le dispositif de contrôle 82 peut comprendre un unique capteur de température disposé dans l'un des espaces fermés 40, 42. Dans ce cas, le conditionnement du fluide hydraulique contenu dans les espaces fermés 40 et 42 est mis en œuvre de manière simultanée, en fonction de la température mesurée par l'unique capteur de température. Si elle ne permet pas un contrôle du conditionnement du fluide hydraulique aussi fin que le contrôle décrit en référence aux figures, cette disposition peut s'avérer avantageuse en ce qu'elle ne nécessite qu'un seul capteur de température. Il s'ensuit un moindre encombrement et une installation facilitée des éléments électroniques à l'intérieur du carter mobile 3, ainsi qu'un coût de fabrication réduit.

Dans un autre mode de réalisation alternatif, le capteur de température peut être disposé de manière à mesurer une autre température, comme par exemple celle de l'eau de mer au voisinage du carter mobile 3.

Au vu de ce qui précède, le dispositif et le procédé qui lui est associé permettent notamment de mettre en œuvre un contrôle du conditionnement du fluide hydraulique servant à lubrifier les paliers de l'arbre d'entraînement de l'hélice, de sorte à actionner le conditionnement que lorsqu'il est nécessaire. Il en résulte une lubrification optimale des paliers, occasionnant notamment une moindre usure des joints d'étanchéité et évitant au maximum les fuites de fluide hydraulique.

**Revendications**

1. Unité de propulsion (2) pour véhicule aquatique comprenant un carter mobile (3) monté en liaison pivot par rapport à un élément de coque (4) du véhicule aquatique, un arbre d'entraînement (20) d'un élément de propulsion (25), ledit arbre (20) étant monté rotatif à l'intérieur du carter mobile (3) au moyen d'au moins un palier (26, 28) comprenant un espace fermé (40, 42) prévu pour être rempli avec un fluide hydraulique, une machine électrique (30) étant apte à entraîner l'arbre d'entraînement (20) en rotation par rapport au carter mobile (3), l'unité de propulsion (2) comportant en outre un module de conditionnement (36) du fluide hydraulique contenu dans l'espace fermé (40, 42) du palier (26, 28), **caractérisée en ce qu'**elle comprend en outre un dispositif de contrôle (82) du conditionnement, le dispositif de contrôle (82) comportant un capteur de température (84, 86) et étant apte à actionner le conditionnement du fluide hydraulique contenu dans l'espace fermé (40, 42) en fonction de la température mesurée par le capteur de température (84, 86), le capteur de température (84, 86) étant apte à mesurer la température du fluide hydraulique contenu dans l'espace fermé (40, 42) du palier (26, 28).

2. Unité de propulsion (2) selon la revendication 1, dans laquelle le dispositif de contrôle (82) est apte à choisir un mode de fonctionnement parmi une désactivation du conditionnement, une activation intermédiaire du conditionnement et une activation nominale du conditionnement.

3. Unité de propulsion (2) selon la revendication 2, dans laquelle le dispositif de contrôle (82) comprend des moyens pour empêcher la circulation de fluide hydraulique dans le module de conditionnement (36) lorsque le mode de fonctionnement choisi est la désactivation du conditionnement.

4. Unité de propulsion (2) selon la revendication 2 ou 3, dans laquelle le dispositif de contrôle (82) comprend des moyens pour faire circuler de manière intermittente le fluide hydraulique dans le module de conditionnement (36) lorsque le mode de fonctionnement choisi est l'activation intermédiaire du conditionnement.

5. Unité de propulsion (2) selon l'une quelconque des revendications 2 à 4, dans laquelle le dispositif de contrôle (82) comprend des moyens pour faire circuler de manière permanente le fluide hydraulique dans le module de conditionnement (36) lorsque le mode de fonctionnement choisi est l'activation nominale du conditionnement.

6. Unité de propulsion (2) selon l'une quelconque des revendications 1 à 5, dans laquelle le dispositif de contrôle (82) comprend une cartographie (88, 90) dans laquelle sont stockées des valeurs de choix d'un mode de fonctionnement en fonction de la température mesurée par le capteur de température (84, 86).

7. Unité de propulsion (2) selon la revendication 6, dans laquelle la cartographie (88, 90) délivre une valeur de désactivation du conditionnement lorsque la température mesurée est inférieure à un premier seuil de température ($T_0$), et une valeur d'activation du conditionnement lorsque la température mesurée est supérieure ou égale audit premier seuil de température ($T_0$).

8. Unité de propulsion (2) selon la revendication 6 ou 7, dans laquelle la cartographie (88) délivre une valeur d'activation intermédiaire du conditionnement lorsque la température mesurée est inférieure à un second seuil de température ($T_1$) et une valeur d'activation nominale du conditionnement lorsque la température mesurée est supérieure ou égale audit second seuil de température ($T_1$).

9. Unité de propulsion (2) selon l'une quelconque des revendications 1 à 8, comprenant un premier palier (26) et un second palier (28), les premier et second paliers (26, 28) étant montés sur l'arbre d'entraînement (20) de part et d'autre de la machine électrique (30), le premier palier (26) comportant un premier espace fermé (40), le second palier (28) comportant un second espace fermé (42), le dispositif de contrôle (82) comprenant un premier capteur de température (84) apte à mesurer la température du fluide hydraulique contenu le premier espace fermé (40), et un second capteur de température (86) apte à mesurer la température du fluide hydraulique contenu dans le second espace fermé (42), le dispositif de contrôle (82) étant apte à mettre en œuvre le conditionnement par le module de conditionnement (36) du fluide hydraulique contenu dans le premier espace fermé (40) et dans le second espace fermé (42), respectivement en fonction des températures mesurées par le premier capteur (84) et le second capteur (86).

10. Unité de propulsion (2) selon la revendication 9, comprenant un premier circuit d'alimentation (58) du premier espace fermé (40) connecté au module de conditionnement (36) et au premier espace fermé (40), un second circuit d'alimentation (59) du second espace fermé (42) connecté au module de conditionnement (36) et au second espace fermé (42), les premier et second circuits d'alimentation (58, 59) étant respectivement divisés en une portion en amont (60) et une portion en aval (70, 72), la portion en amont (60) du premier circuit d'alimentation (58) et la portion en amont (60) du second circuit d'alimentation (59) étant communes, la portion en aval (70) du premier circuit d'alimentation (58) étant distincte de la portion en aval (72) du second circuit d'alimentation (59), une vanne trois voies (62) délimitant la portion en amont (60) des premier et second circuits d'alimentation (58, 59), la portion en aval (70) du premier circuit d'alimentation (58) et la portion en aval (72) du second circuit d'alimentation (59).

11. Unité de propulsion selon la revendication 9 ou 10, comprenant un premier circuit d'évacuation du premier espace fermé connecté au premier espace fermé et au module de conditionnement, un second circuit d'évacuation du second espace fermé connecté au second espace fermé et au module de conditionnement, les premier et second circuits d'évacuation étant respectivement divisés en une portion en amont et une portion en aval, la portion en amont du premier circuit d'évacuation étant distincte de la portion en amont du second circuit d'évacuation, la portion en aval du premier circuit d'évacuation et la portion en aval du second circuit d'évacuation étant communes, un organe de répartition délimitant la portion en aval des premier et second circuits d'évacuation, la portion en amont du premier circuit d'évacuation et la portion en amont du second circuit d'évacuation.

12. Procédé de contrôle d'une unité de propulsion (2) selon l'une quelconque des revendications 1 à 11, dans lequel on mesure la température du fluide hydraulique contenu dans l'espace fermé (40, 42) du palier (26, 28), puis on choisit un mode de fonctionnement du conditionnement du fluide hydraulique en fonction de la température mesurée, et on met en œuvre le conditionnement du fluide hydraulique par le module de conditionnement (36) selon le mode de fonctionnement choisi.

13. Procédé de contrôle selon la revendication 12, dans lequel on compare la température mesurée à un premier seuil ($T_0$) et à un troisième seuil ($T_2$), le troisième seuil ($T_2$) étant supérieur au premier seuil ($T_0$), puis,

   - si la température mesurée est inférieure au premier seuil ($T_0$), on désactive le conditionnement du fluide hydraulique tant que la température mesurée reste inférieure au troisième seuil ($T_2$), puis on active le conditionnement du fluide hydraulique dès que la température devient supérieure ou égale au troisième seuil ($T_2$),
   - si la température mesurée est supérieure ou égale au troisième seuil ($T_2$), on active le conditionnement du fluide hydraulique tant que la température mesurée reste supérieure au premier seuil ($T_0$), puis on désactive le conditionnement du fluide hydraulique dès que la température devient inférieure au premier seuil ($T_0$).

14. Procédé de contrôle selon la revendication 12 ou 13, dans lequel on compare la température mesurée à un second seuil ($T_1$) et à un quatrième seuil ($T_3$), le quatrième seuil ($T_3$) étant supérieur au second seuil ($T_1$), puis,

   - si la température mesurée est inférieure au second seuil ($T_1$), on active le conditionnement du fluide hydraulique de manière intermédiaire tant que la température mesurée reste inférieure au quatrième seuil ($T_3$), puis on active le conditionnement du fluide hydraulique de manière permanente dès que la température devient supérieure ou égale au quatrième seuil ($T_3$),
   - si la température mesurée est supérieure ou égale au quatrième seuil ($T_3$), on active le conditionnement du fluide hydraulique de manière permanente tant que la température mesurée reste supérieure au deuxième seuil ($T_1$), puis on active le conditionnement du fluide hydraulique dès que la température devient inférieure au deuxième seuil ($T_1$).

**Patentansprüche**

1. Vortriebseinheit (2) für ein Wasserfahrzeug, umfassend ein bewegliches Gehäuse (3), das in Bezug auf ein Rumpfelement (4) des Wasserfahrzeugs in Schwenkverbindung montiert ist, eine Antriebswelle (20) eines Vortriebselements (25), wobei die Welle (20) anhand mindestens eines Lagers (26, 28) drehbar im Inneren des beweglichen Gehäuses (3) montiert ist, einen geschlossenen Raum (40, 42) umfassend, der vorgesehen ist, um mit einer Hydraulikflüssigkeit gefüllt zu werden, wobei eine elektrische Maschine (30) imstande ist, die Antriebswelle (20) in Bezug auf das bewegliche Gehäuse (3) in Drehung anzutreiben, wobei die Vortriebseinheit (2) weiter ein Aufbereitungsmodul (36) der Hydraulikflüssigkeit, die in dem geschlossenen Raum (40, 42) des Lagers (26, 28) enthalten ist, beinhaltet, **dadurch gekennzeichnet, dass** sie weiter eine Kontrollvorrichtung (82) der Aufbereitung umfasst, wobei die Kontrollvorrichtung (82) einen Temperatursensor (84, 86) beinhaltet, und imstande ist, die Aufbereitung der Hydraulikflüssigkeit, die in dem geschlossenen Raum (40, 42) enthalten ist, in Abhängigkeit von der durch den Temperatursensor (84, 86) gemessenen Temperatur zu betätigen, wobei der Temperatursensor (84, 86) imstande ist, die Temperatur der Hydraulikflüssigkeit, die in dem geschlossenen Raum (40, 42) des Lagers (26, 28) enthalten ist, zu messen.

2. Vortriebseinheit (2) nach Anspruch 1, wobei die Kontrollvorrichtung (82) imstande ist, einen Betriebsmodus aus einer Deaktivierung der Aufbereitung, einer Zwischenaktivierung der Aufbereitung und einer nominalen Aktivierung der Aufbereitung auszuwählen.

3. Vortriebseinheit (2) nach Anspruch 2, wobei die Kontrollvorrichtung (82) Mittel zum Verhindern der Zirkulation der Hydraulikflüssigkeit in dem Aufbereitungsmodul (36) umfasst, wenn der ausgewählte Betriebsmodus die Deaktivierung der Aufbereitung ist.

4. Vortriebseinheit (2) nach Anspruch 2 oder 3, wobei die Kontrollvorrichtung (82) Mittel zum intermittierenden Zirkulieren lassen der Hydraulikflüssigkeit in dem Aufbereitungsmodul (36) umfasst, wenn der ausgewählte Betriebsmodus die Zwischenaktivierung der Aufbereitung ist.

5. Vortriebseinheit (2) nach einem der Ansprüche 2 bis 4, wobei die Kontrollvorrichtung (82) Mittel zum permanenten Zirkulieren lassen der Hydraulikflüssigkeit in dem Aufbereitungsmodul (36) umfasst, wenn der ausgewählte Betriebsmodus die nominale Aktivierung der Aufbereitung ist.

6. Vortriebseinheit (2) nach einem der Ansprüche 1 bis 5, wobei die Kontrollvorrichtung (82) eine Kartographie (88, 90) umfasst, in der Werte zur Wahl eines Betriebsmodus in Abhängigkeit von der durch den Temperatursensor (84, 86) gemessenen Temperatur abgelegt sind.

7. Vortriebseinheit (2) nach Anspruch 6, wobei die Kartographie (88, 90) einen Wert zur Deaktivierung der Aufbereitung abgibt, wenn die gemessene Temperatur kleiner als ein erster Temperaturschwellenwert ($T_0$) ist, und einen Wert zur Aktivierung der Aufbereitung, wenn die gemessene Temperatur größer oder gleich dem ersten Temperaturschwellenwert ($T_0$) ist.

8. Vortriebseinheit (2) nach Anspruch 6 oder 7, wobei die Kartographie (88) einen Wert zur Zwischenaktivierung der Aufbereitung abgibt, wenn die gemessene Temperatur kleiner als ein zweiter Temperaturschwellenwert ($T_1$) ist, und einen Wert zur nominalen Aktivierung der Aufbereitung, wenn die gemessene Temperatur größer oder gleich dem zweiten Temperaturschwellenwert ($T_1$) ist.

9. Vortriebseinheit (2) nach einem der Ansprüche 1 bis 8, umfassend ein erstes Lager (26) und ein zweites Lager (28), wobei das erste und zweite Lager (26, 28) auf der Antriebswelle (20) beiderseits der elektrischen Maschine (30) montiert sind, wobei das erste Lager (26) einen ersten geschlossenen Raum (40) beinhaltet, das zweite Lager (28) einen zweiten geschlossenen Raum (42) beinhaltet, die Kontrollvorrichtung (82) einen ersten Temperatursensor (84) umfasst, der imstande ist, die Temperatur der Hydraulikflüssigkeit, die in dem ersten geschlossenen Raum (40) enthalten ist, zu messen, und einen zweiten Temperatursensor (86), der imstande ist, die Temperatur der Hydraulikflüssigkeit, die in dem zweiten geschlossenen Raum (42) enthalten ist, zu messen, wobei die Kontrollvorrichtung (82) imstande ist, die Aufbereitung durch das Aufbereitungsmodul (36) der Hydraulikflüssigkeit, die in dem ersten geschlossenen Raum (40) und in dem zweiten geschlossenen Raum (42) enthalten ist, jeweils in Abhängigkeit von den durch den ersten Sensor (84) und den zweiten Sensor (86) gemessenen Temperaturen umzusetzen.

10. Vortriebseinheit (2) nach Anspruch 9, umfassend einen ersten Versorgungskreis (58) des ersten geschlossenen Raumes (40), der mit dem Aufbereitungsmodul (36) und dem ersten geschlossenen Raum (40) verbunden ist, einen zweiten Versorgungskreis (59) des zweiten geschlossenen Raumes (42), der mit dem Aufbereitungsmodul (36) und dem zweiten geschlossenen Raum (42) verbunden ist, wobei der erste und zweite Versorgungskreis (58, 59) jeweils in einen stromaufwärtigen Abschnitt (60) und einen stromabwärtigen Abschnitt (70, 72) geteilt sind, wobei der stromaufwärtige Abschnitt (60) des ersten Versorgungskreises (58) und der stromaufwärtige Abschnitt (60) des zweiten Versorgungskreises (59) gemeinsam sind, der stromabwärtige Abschnitt (70) des ersten Versorgungskreises (58) von dem stromabwärtigen Abschnitt (72) des zweiten Versorgungskreises (59) getrennt ist, ein Drei-Wege-Ventil (62) den stromaufwärtigen Abschnitt (60) des ersten und zweiten Versorgungskreises (58, 59), den stromabwärtigen Abschnitt (70) des ersten Versorgungskreises (58) und den stromabwärtigen Abschnitt (72) des zweiten Versorgungskreises (59) begrenzt.

**11.** Vortriebseinheit nach Anspruch 9 oder 10, umfassend einen ersten Ausbringungskreis aus dem ersten geschlossenen Raum, der mit dem ersten geschlossenen Raum und mit dem Aufbereitungsmodul verbunden ist, einen zweiten Ausbringungskreis aus dem zweiten geschlossenen Raum, der mit dem zweiten geschlossenen Raum und mit dem Aufbereitungsmodul verbunden ist, wobei der erste und zweite Ausbringungskreis jeweils in einen stromaufwärtigen Abschnitt und einen stromabwärtigen Abschnitt geteilt sind, wobei der stromaufwärtige Abschnitt des ersten Ausbringungskreises vom stromaufwärtigen Abschnitt des zweiten Ausbringungskreises getrennt ist, wobei der stromabwärtige Abschnitt des ersten Ausbringungskreises und der stromabwärtige Abschnitt des zweiten Ausbringungskreises gemeinsam sind, wobei ein Aufteilungsorgan den stromabwärtigen Abschnitt des ersten und zweiten Ausbringungskreises, den stromaufwärtigen Abschnitt des ersten Ausbringungskreises und den stromaufwärtigen Abschnitt des zweiten Ausbringungskreises begrenzt.

**12.** Verfahren zur Kontrolle einer Vortriebseinheit (2) nach einem der Ansprüche 1 bis 11, wobei die Temperatur der Hydraulikflüssigkeit, die in dem geschlossenen Raum (40, 42) des Lagers (26, 28) enthalten ist, gemessen wird, danach in Abhängigkeit von der gemessenen Temperatur ein Betriebsmodus der Aufbereitung der Hydraulikflüssigkeit ausgewählt wird, und die Aufbereitung der Hydraulikflüssigkeit durch das Aufbereitungsmodul (36) gemäß dem gewählten Betriebsmodus umgesetzt wird.

**13.** Verfahren zur Kontrolle nach Anspruch 12, wobei die gemessene Temperatur mit einem ersten Schwellenwert ($T_0$) und einem dritten Schwellenwert ($T_2$) verglichen wird, wobei der dritte Schwellenwert ($T_2$) größer als der erste Schwellenwert ($T_0$) ist, danach

     - wenn die gemessene Temperatur kleiner als der erste Schwellenwert ($T_0$) ist, die Aufbereitung der Hydraulikflüssigkeit deaktiviert wird, solange die gemessene Temperatur kleiner als

der zweite Schwellenwert ($T_2$) bleibt, danach die Aufbereitung der Hydraulikflüssigkeit aktiviert wird, sobald die Temperatur größer oder gleich dem dritten Schwellenwert ($T_2$) wird,
     - wenn die gemessene Temperatur größer oder gleich dem dritten Schwellenwert ($T_2$) ist, die Aufbereitung der Hydraulikflüssigkeit aktiviert wird, solange die gemessene Temperatur größer als der erste Schwellenwert ($T_0$) bleibt, danach die Aufbereitung der Hydraulikflüssigkeit deaktiviert wird, sobald die Temperatur kleiner als der erste Schwellenwert ($T_0$) wird.

**14.** Verfahren zur Kontrolle nach Anspruch 12 oder 13, wobei die gemessene Temperatur mit einem zweiten Schwellenwert ($T_1$) und einem vierten Schwellenwert ($T_3$) verglichen wird, wobei der vierte Schwellenwert ($T_3$) größer als der zweite Schwellenwert ($T_1$) ist, danach

     - wenn die gemessene Temperatur kleiner als der zweite Schwellenwert ($T_1$) ist, die Aufbereitung der Hydraulikflüssigkeit zwischenzeitlich aktiviert wird, solange die gemessene Temperatur kleiner als der vierte Schwellenwert ($T_3$) bleibt, danach die Aufbereitung der Hydraulikflüssigkeit permanent aktiviert wird, sobald die Temperatur größer oder gleich dem vierten Schwellenwert ($T_3$) wird,
     - wenn die gemessene Temperatur größer oder gleich dem vierten Schwellenwert ($T_3$) ist, die Aufbereitung der Hydraulikflüssigkeit permanent aktiviert wird, solange die gemessene Temperatur größer als der zweite Schwellenwert ($T_1$) bleibt, danach die Aufbereitung der Hydraulikflüssigkeit aktiviert wird, sobald die Temperatur kleiner als der zweite Schwellenwert ($T_1$) wird.

## Claims

**1.** A propulsion unit (2) for watercraft comprising a movable casing (3) mounted in pivot connection relative to a shell element (4) of the watercraft, a drive shaft (20) of a propulsion element (25), said shaft (20) being rotatably mounted inside the movable casing (3) by means of at least one bearing (26, 28) comprising a closed space (40, 42) provided to be filled with a hydraulic fluid, an electric machine (30) being able to rotate the drive shaft (20) relative to the movable casing (3), the propulsion unit (2) further including a module (36) for conditioning the hydraulic fluid contained in the closed space (40, 42) of the bearing (26, 28), **characterised in that** it further comprises a conditioning control device (82), the control device (82) including a temperature sensor (84, 86) and being able to actuate the conditioning of the hydraulic fluid contained in the closed space (40, 42) depending on the temperature measured by the temperature sensor (84, 86), the temperature sensor (84, 86) being able to measure the temperature of the hydraulic fluid contained in the closed space (40, 42) of the bearing (26, 28).

2. The propulsion unit (2) according to claim 1, wherein the control device (82) is able to select an operating mode from a deactivation of the conditioning, an intermediate activation of the conditioning and a nominal activation of the conditioning.

3. The propulsion unit (2) according to claim 2, wherein the control device (82) comprises means for preventing the circulation of hydraulic fluid into the conditioning module (36) when the operating mode selected is the deactivation of the conditioning.

4. The propulsion unit (2) according to claim 2 or 3, wherein the control device (82) comprises means for intermittently circulating the hydraulic fluid in the conditioning module (36) when the operating mode selected is the intermediate activation of the conditioning.

5. The propulsion unit (2) according to any one of claims 2 to 4, wherein the control device (82) comprises means for permanently circulating the hydraulic fluid in the conditioning module (36) when the operating mode selected is the nominal activation of the conditioning.

6. The propulsion unit (2) according to any one of claims 1 to 5, wherein the control device (82) comprises a mapping (88, 90) wherein values for selecting an operating mode are stored depending on the temperature measured by the temperature sensor (84, 86).

7. The propulsion unit (2) according to claim 6, wherein the mapping (88, 90) provides a conditioning deactivation value when the measured temperature is less than a first temperature threshold ($T_0$), and a conditioning activation value when the measured temperature is greater than or equal to said first temperature threshold ($T_0$).

8. The propulsion unit (2) according to claim 6 or 7, wherein the mapping (88) provides an intermediate conditioning activation value when the measured temperature is less than a second temperature threshold ($T_1$) and a nominal conditioning activation value when the measured temperature is greater than or equal to said second temperature threshold ($T_1$).

9. The propulsion unit (2) according to any one of claims 1 to 8, comprising a first bearing (26) and a second bearing (28), the first and second bearings (26, 28) being mounted on the drive shaft (20) on either side of the electric machine (30), the first bearing (26) including a first closed space (40), the second bearing (28) including a second closed space (42), the control device (82) comprising a first temperature sensor (84) capable of measuring the temperature of the hydraulic fluid contained in the first closed space (40), and a second temperature sensor (86) capable of measuring the temperature of the hydraulic fluid contained in the second closed space (42), the control device (82) being able to implement the conditioning by the module (36) for conditioning the hydraulic fluid contained in the first closed space (40) and in the second closed space (42), respectively depending on the temperatures measured by the first sensor (84) and the second sensor (86).

10. The propulsion unit (2) according to claim 9, comprising a first power circuit (58) of the first closed space (40) connected to the conditioning module (36) and to the first closed space (40), a second power circuit (59) of the second closed space (42) connected to the conditioning module (36) and to the second closed space (42), the first and second power circuits (58, 59) being respectively divided into an upstream portion (60) and a downstream portion (70, 72), the upstream portion (60) of the first power circuit (58) and the upstream portion (60) of the second power circuit (59) being common, the downstream portion (70) of the first power circuit (58) being distinct from the downstream portion (72) of the second power circuit (59), a three-way valve (62) delimiting the upstream portion (60) of the first and second power circuits (58, 59), the downstream portion (70) of the first power circuit (58) and the downstream portion (72) of the second power circuit (59).

11. The propulsion unit according to claim 9 or 10, comprising a first exhaust circuit from the first closed space connected to the first closed space and to the conditioning module, a second exhaust circuit from the second closed space connected to the second closed space and to the conditioning module, the first and second exhaust circuits being respectively divided into an upstream portion and a downstream portion, the upstream portion of the first exhaust circuit being distinct from the upstream portion of the second exhaust circuit, the downstream portion of the first exhaust circuit and the downstream portion of the second exhaust circuit being common, a distribution member delimiting the downstream portion of the first and second exhaust circuits, the upstream portion of the first exhaust circuit and the upstream portion of the second exhaust circuit.

12. A method for controlling a propulsion unit (2) according to any one of claims 1 to 11, wherein the temperature of the hydraulic fluid contained in the closed space (40, 42) of the bearing (26, 28) is measured, then an operating mode of the conditioning of the hydraulic fluid is selected depending on the measured temperature, and the conditioning of the hydraulic fluid is implemented by the conditioning module (36) according to the selected operating mode.

13. The control method according to claim 12, wherein the measured temperature is compared to a first threshold ($T_0$) and to a third threshold ($T_2$), the third threshold ($T_2$) being greater than the first threshold ($T_0$), then,

    - if the measured temperature is less than the first threshold ($T_0$), the hydraulic fluid conditioning is deactivated as long as the measured temperature remains less than the third threshold ($T_2$), then the hydraulic fluid conditioning is activated as soon as the temperature becomes greater than or equal to the third threshold ($T_2$),
    - if the measured temperature is greater than or equal to the third threshold ($T_2$), the hydraulic fluid conditioning is activated as long as the measured temperature remains greater than the first threshold ($T_0$), then the hydraulic fluid conditioning is deactivated as soon as the temperature becomes less than the first threshold ($T_0$).

14. The control method according to claim 12 or 13, wherein the measured temperature is compared to a second threshold ($T_1$) and to a fourth threshold ($T_3$), the fourth threshold ($T_3$) being greater than the second threshold (T1), then,

    - if the measured temperature is less than the second threshold ($T_1$), the hydraulic fluid conditioning is intermediately activated as long as the measured temperature remains less than the fourth threshold ($T_3$), then the hydraulic fluid conditioning is permanently activated as soon as the temperature becomes greater than or equal to the fourth threshold ($T_3$),
    - if the measured temperature is greater than or equal to the fourth threshold ($T_3$), the hydraulic fluid conditioning is permanently activated as long as the measured temperature remains greater than the second threshold ($T_1$), then the hydraulic fluid conditioning is activated as soon as the temperature becomes less than the second threshold ($T_1$).

FIG. 1

FIG. 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- WO 2009127774 A1